(19) **Europäisches Patentamt**

**European Patent Office**

**Office européen des brevets**

(11) **EP 1 395 045 B1**

(12) **EUROPEAN PATENT SPECIFICATION**

(45) Date of publication and mention
of the grant of the patent:
**08.12.2004 Bulletin 2004/50**

(51) Int Cl.⁷: $H04N\ 5/445$

(21) Application number: **03010179.4**

(22) Date of filing: **06.05.2003**

(54) **Received information display device and method of control thereof**

Vorrichtung zur Anzeige von erhaltenen Informationen und dessen Steuerungsverfahren

Dispositif pour l'affichage des informations reçues et procédé de contrôle

(84) Designated Contracting States:
**DE FR GB**

(30) Priority: **23.08.2002 JP 2002243828**

(43) Date of publication of application:
**03.03.2004 Bulletin 2004/10**

(73) Proprietor: **Kabushiki Kaisha Toshiba**
**Tokyo (JP)**

(72) Inventor: **Uehara, Shoji**
**1-chome, Minato-ku, Tokyo 105-8001 (JP)**

(74) Representative: **Henkel, Feiler & Hänzel**
**Möhlstrasse 37**
**81675 München (DE)**

(56) References cited:
**US-A- 5 546 131**     **US-A- 5 805 153**
**US-A- 6 067 070**

**Description**

The present invention relates to a received information display device which receives digital television broadcast signals or digital data broadcast signals through satellites and displays received information on a screen and a method of control thereof.

As is well known, the digitization of television (TV) broadcasting has been advanced in recent years. For instance, digital DBS (direct broadcasting by satellite) has already been put into practical use.

Such digital broadcasting systems provide users not only with television broadcasts but with data broadcasts for a wide variety of information.

In that case, a user is allowed to receive a variety of services by causing his or her own television receiver to receive a data broadcast and visually displaying graphical information or character information contained in the received information on the screen of the television receiver.

The method of displaying information provided by data broadcasting has been standardized, thereby allowing different types of television receivers to provide the same display for received information.

That is, the user, provided he or she uses a type of television receiver that conforms to the standards, is allowed to receive services as intended by data broadcast providers.

In order to allow television programs of a different aspect ratio from their screen aspect ratio to be received and displayed, television receivers today are designed such that the user can deliberately change the picture display area (aspect ratio) on the screen, i.e., the display screen mode.

The display size and display position of character information in data broadcasts have been defined by the above standards and cannot be changed by user's display screen mode setting.

For this reason, if the display screen mode set by the user does not conform to data broadcasting, character information contained in data broadcasts can extend beyond the display area in the screen mode set by the user, resulting in the occurrence of missing characters.

On the occurrence of missing characters, at present the user has to perform an operation of changing the display screen mode so that all the character information is displayed.

Japanese Unexamined Patent Publication No. 11-136592 discloses a technique in which an input video signal is separated into a picture signal and a subtitle signal, and a video signal having the subtitle signal inserted into an enlarged picture signal is displayed, thereby preventing the occurrence of missing characters resulting from the subtitles protruding from the screen when the picture is enlarged.

In the technique disclosed in this publication, however, all the characters to be displayed at one time on the screen are moved or compacted. Thus, the characters are not displayed in their original positions, causing picture portions to be hidden undesirably or the character size to be changed with each change in scene. This is liable to give viewers a feeling that something is wrong.

It is therefore an object of the present invention to provide a received information display device and a method of control thereof which allow received character information to be displayed in its entirety regardless of what display screen mode is set and without giving viewers a feeling that something is wrong.

According to an aspect of the present invention, there is provided a received information display device characterized by comprising: an information display section configured to receive picture information and character information and display the character information on a first picture display area set up on a display screen on the basis of the picture information; a switching section configured to, in a state in which the picture information and the character information are being displayed on the first picture display area set up on the display screen by the information display section switch from the first picture display area on the display screen to a second picture display area; a detecting section configured to, in a state in which switching from the first picture display area on the display screen to the second picture display area has been made by the switching section, detect a character disappearance area in which a portion of the character information extends beyond the second picture display area and is not displayed; a setting section configured to, on the basis of the character disappearance area detected by the detecting section, set a region of and a ratio of compression of the character information required to display that portion of character information which extends beyond the second picture display area and is not displayed within the second picture display area; and a compression section configured to compress the character information on the basis of the compression region and ratio set by the setting section.

According to another aspect of the present invention, there is provided a method for controlling a received information display device characterized by comprising: receiving picture information and character information to display the character information on a first picture display area set up on a display screen on the basis of the picture information; switching, in a state in which the picture information and the character information are being displayed on the first picture display area set up on the display screen by the information display section, from the first picture display area on the display screen to a second picture display area; detecting, in a state in which switching from the first picture display area on the display screen to the second picture display area has been made, a character disappearance area in which a portion of the character information extends beyond the second picture display area and is not displayed; setting, on the basis of the detected character disappearance area, a region of and a ratio of compression of the character information required to display that portion of character information which extends beyond the second picture display area and is not displayed within the second picture display area; and compressing the character information on the basis of the set compression region and ratio.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram of a television receiver in accordance with a first embodiment of the present invention;

FIG. 2 shows an arrangement of the compression ratio determination/selection circuit in FIG. 1;

FIG. 3 is a diagram for use in explaining the outputs of the specified display area calculation circuit, the displayable area calculation circuit, and the comparator in FIG. 1;

FIG. 4 is a diagram for use in explaining screen display resulting from compression processing on graphics signals in accordance with the first embodiment;

FIG. 5 is a conceptual view of compression from five pixels to three pixels in accordance with the first embodiment;

FIG. 6 shows an arrangement of a compressor that compresses five pixels to one pixel in accordance with the first embodiment;

FIG. 7 is a diagram for use in explaining an example of control of regions on which compression is performed on the screen in accordance with the first embodiment;

FIG. 8 is a diagram for use in explaining another example of control of regions on which compression is performed on the screen in accordance with the first embodiment;

FIG. 9 is a flowchart illustrating the operation when the user switches from a display screen mode to another in accordance with the first embodiment;

FIG. 10 is a diagram for use in explaining a method of calculating coordinates of a displayable area on the screen in accordance with the first embodiment;

FIGS. 11A and 11B form a flowchart illustrating a character display processing operation in accordance with the first embodiment;

FIG. 12 is a diagram for use in explaining shifting of a screen area to prevent screen burn in accordance with a second embodiment of the present invention; and

FIG. 13 is a block diagram of a television receiver in accordance with the second embodiment.

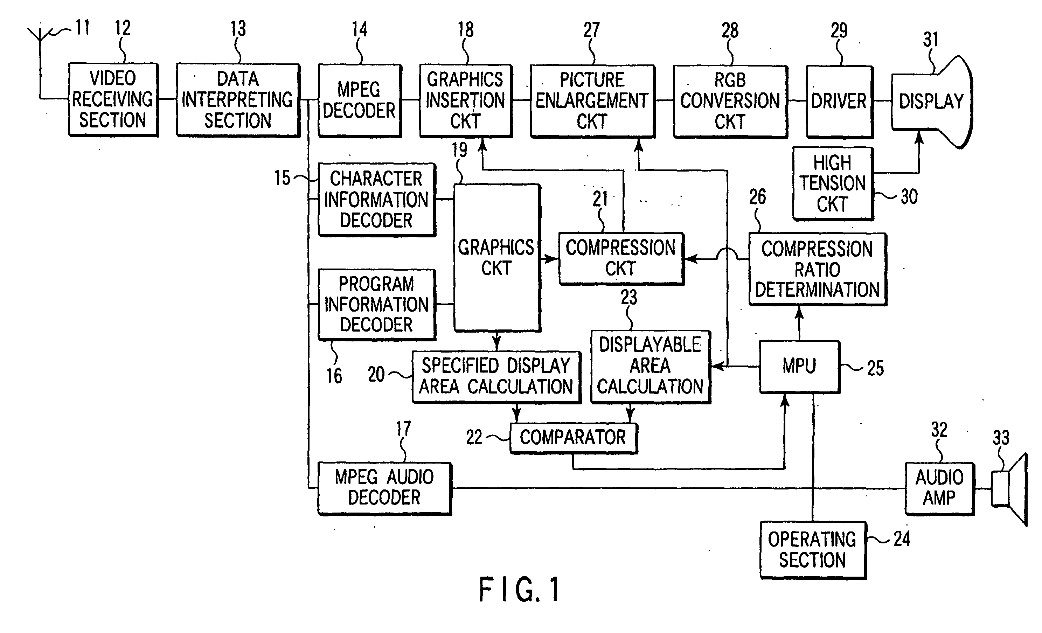

A first embodiment of the present invention will be described in detail hereinafter with reference to the accompanying drawings. FIG. 1 is a block diagram of a television receiver of the first embodiment.

Digital broadcast data received by an antenna 11 is applied to a video receiving section 12, which selects a signal of a specific frequency band from certain frequency bands. The resulting digital signal is output to a data interpreting section 13.

The main methods for superimposing picture information include QAM (Quadrature Amplitude Modulation), OFDM (Orthogonal Frequency Division Multiplex), and VSB (Vestigial Sideband).

The data interpreting section 13 separates picture information output from the video receiving section 12 into a picture signal, character information, program information, and an audio signal which are in turn output to an MPEG (Moving Picture Experts Group) decoder 14, a character information decoding circuit 15, a program information decoding circuit 16, and an MPEG audio decoder 17, respectively. In the case of the MPEG system, the separated item of information are distinguished from one another by means of PID (Packet Identification).

The MPEG decoder 14 decodes the picture signal separated in the data interpreting circuit 13 and outputs the decoded picture signal to a graphics insertion circuit 18.

The character information decoding circuit 15 interprets the character information separated in the data interpreting circuit 13. In the character information, to display characters, their display positions, color and size are specified and figures are specified in bitmapped form.

The program information decoding circuit 16 decodes information related to input picture information. The program information corresponds to, for example, a table of programs or explanatory information for each picture information.

The character information decoded by the character information decoding circuit 15 and the program information decoding circuit 16 is fed into a graphics circuit 19 where it is developed into a graphics signal corresponding to one frame of television picture. The graphics signal is output to a specified display area calculation circuit 20 and a compression circuit 21.

The specified display area calculation circuit 20 calculates which positions on the screen the transmitted characters have been mapped to and a display area from the character size to obtain the minimum area required to display the characters. The result is output to one input of a comparator 22. Specifically, the beginning and ending positions in the horizontal and vertical directions of character display are calculated.

The comparator 22 is supplied at its other input with the output of a displayable area calculation circuit 23, which calculates a displayable area on a display screen mode set by the user through an operating section 24. The operating section 24 is comprises keys placed on the television receiver or a remote controller.

The comparator 22 makes a comparison between the outputs of the specified display area calculation circuit 20 and the displayable area calculation circuit 23 to calculate a non-display area where characters extends beyond the displayable area and hence are not displayed, i.e., where characters disappear.

In the first embodiment, the disappearance of characters is prevented by controlling the compression ratio in the horizontal or vertical direction of the screen in real time so that characters in the non-display area may be displayed in the displayable area.

The output of the comparator 22 is applied to an MPU (Micro Processing Unit) 25, which controls the television receiver in response to operating information from the operating section 24.

Based on the output of the comparator 22, the MPU 25 detects the presence of a character non-display area, i.e., the occurrence of disappearance of characters and causes a compression ratio determination/selection circuit 26 to determine a compression ratio or compression region. The resultant compression ratio or compression region is output to a compression circuit 21.

Based on the compression ratio or compression range from the compression ratio determination/selection circuit 26, the compression circuit 21 compresses the graphics signal from the graphics circuit 19. The compressed graphics signal is applied to a graphics insertion circuit 18.

The graphics insertion circuit 18 combines the picture signal output from the MPEG decoder 14 and the compressed graphics signal output from the compression circuit 21 and outputs the resultant composite picture signal to a picture enlargement circuit 27.

The picture enlargement circuit 27 modifies the picture signal output from the graphics insertion circuit 18 so that it will be displayed in a picture display area in a user-set display screen mode.

The picture signal output from the picture enlargement circuit 27 is separated into three primary color components of R (Red), G (Green), and B (Blue) in an RGB conversion circuit 28, which are in turn applied through a drive circuit 28 to a display device 31, such as a cathode ray tube, which is powered from a high-tension circuit 30.

The MPEG audio decoder 17 performs a decoding process on the audio signal separated in the data interpreting circuit 13 for conversion into an analog signal. The audio signal output from the MPEG audio decoder 17 is applied through an audio amplifier 32 to a loudspeaker 33 whereby it is audibly reproduced.

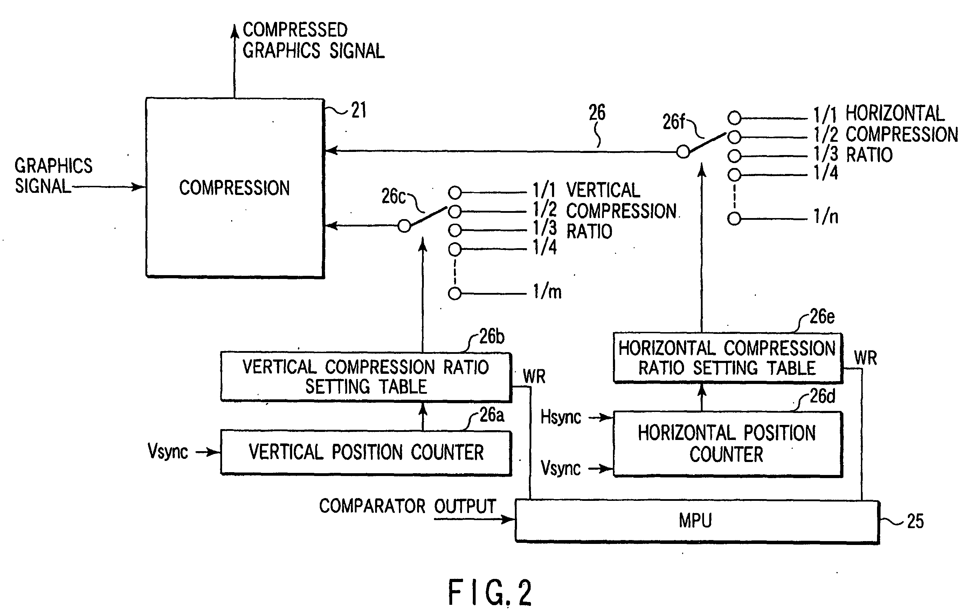

FIG. 2 shows an exemplary arrangement of the compression ratio determination/selection circuit 26. A vertical position counter 26a is adapted to specify any position in the vertical direction of the display screen by cyclically counting a reference clock signal of a fixed frequency with a vertical sync signal Vsync as a reset pulse.

The output of the vertical position counter 26a is applied to a vertical compression ratio setting table 26b, the contents of which can be set by the MPU 25.

The vertical compression ratio setting table 26b controls a vertical compression ratio changeover switch 26c on the basis of the vertical position information output from the vertical position counter 26a and a compression ratio preset by the MPU 25.

A compression ratio selected by the vertical compression ratio changeover switch 26c is applied to the compression circuit 21, allowing a given region in the vertical direction of the display screen to be compressed at a given compression ratio.

A horizontal position counter 26d is adapted to specify any position in the horizontal direction of the display screen by counting a reference clock signal of a fixed frequency with a horizontal sync signal Hsync and the vertical sync signal Vsync as reset pulses.

The output of the horizontal position counter 26d is applied to a horizontal compression ratio setting table 26e, the contents of which can be set by the MPU 25.

The horizontal compression ratio setting table 26e controls a horizontal compression ratio changeover switch 26f on the basis of the horizontal position information output from the horizontal position counter 26d and a compression ratio preset by the MPU 25.

A compression ratio selected by the horizontal compression ratio changeover switch 26f is applied to the compression circuit 21, allowing a given range in the horizontal direction of the display screen to be compressed at a given compression ratio.

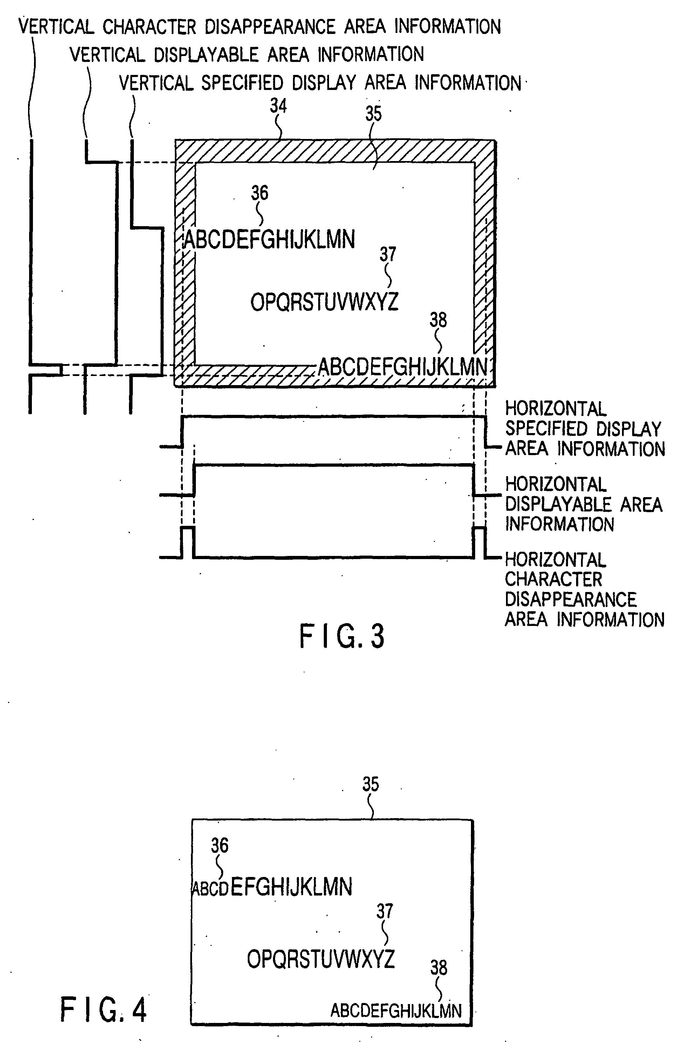

FIG. 3 shows the outputs of the specified display area calculation circuit 20, the displayable area calculation circuit 23, and the comparator 22. In FIG. 3, a screen area 34 indicates an image display area that a data broadcast provider intends, while a screen area 35 indicates an image display area in a display screen mode set by the user.

Character strings 36, 37 and 38 will be originally displayed in specified positions on the screen area 34 specified by the data broadcast provider. In this example, however, since the screen area 35 in the display screen mode set by the user is smaller than the screen area 34, the leading character A of the character string 36 and the lower portion of the character string 38 extend beyond the screen area 35 and disappear.

The specified display area calculation circuit 20 calculates, from the character strings 36, 37 and 38, horizontal specified display area information indicating a character display area in the horizontal direction and vertical specified display area information indicating a character display area in the vertical direction.

The displayable area calculation circuit 23 calculates, from the user-specified display screen mode, horizontal displayable area information indicating an area in the horizontal direction where a picture can actually be displayed and vertical displayable area information indicating an area in the vertical direction where a picture can actually be displayed.

The picture displayable area can be readily calculated from the enlargement ratios in the horizontal and vertical directions for the screen area 34 specified by the data broadcast provider. To be specific, suppose that the enlargement ratio in the horizontal direction is N and the enlargement ratio in the vertical direction is M. Then, the horizontal displayable area becomes 1/N of the original screen area 34 in the horizontal direction and the vertical displayable area becomes 1/M of the original screen area 34 in the vertical direction.

By comparing the horizontal and vertical specified display area information with the horizontal and vertical displayable area information in the comparator 22, horizontal character disappear area information indicating a non-display area in the horizontal direction and vertical character disappear area information indicating a non-display area in the vertical direction are obtained.

FIG. 4 shows an example of compression processing on the graphics signal by the compression circuit 21 based on the horizontal and vertical character disappear area information produced by the comparator 22. The portions that extend beyond the screen area 35 and hence cannot be displayed are compressed and incorporated into the screen area 35.

Specifically, the four leading characters "ABCD" of the character string 36 and all the characters of the character string 38 are compressed, while the character string 37 that can be displayed within the screen area 35 from the beginning without any character loss is not compressed.

According to such a display method, the region of compression is set so that character missing portions are incorporated into the screen area 35 without changing the display positions of the character strings 36, 37 and 38, thus allowing character information to be displayed with no loss of any character and without giving the viewer a feeling that something is wrong.

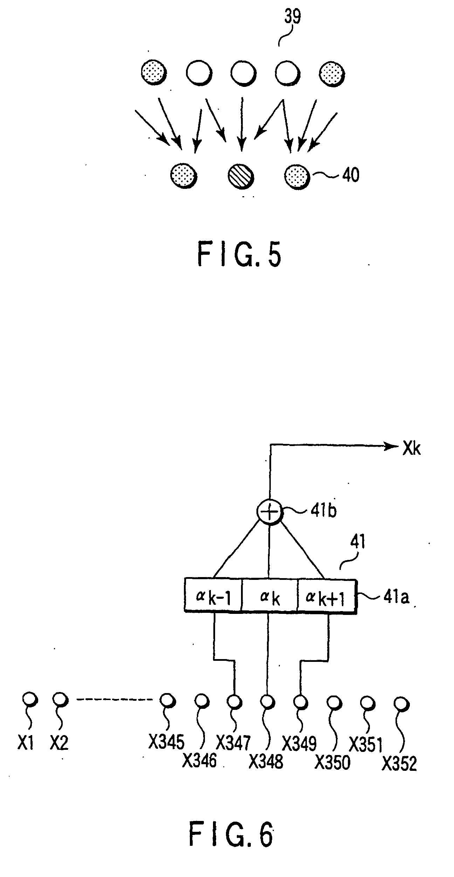

FIG. 5 is a conceptual view of compression. For example, for a compression ratio of 3/5, new three pixels 40 are simply produced from original five pixels 39. The simplest method would be to remove two pixels from the original five pixels and use the remaining three pixels.

With this method, however, the resultant picture would become noticeably bulky, severely degrading the picture quality. In general, therefore, it is desirable to create a new pixel from two or more original pixels through calculations utilizing interpixel redundancy.

In that case, the new pixel is created by multiplying each of the n original pixels $\{x_1, x_2, x_3, \cdots, x_n\}$ and a respective corresponding one of the coefficients $\{\alpha_1, \alpha_2, \alpha_3, \cdots, \alpha_n\}$ and summing the products.

FIG. 6 shows an exemplary arrangement of a compressor 41 that creates one pixel from three pixels through calculations. The compressor 41 is composed of a multiplier 41a that multiplies each of the three consecutive pixels $x_{k-1}$, $x_k$ and $x_{k+1}$ and a respective corresponding one of the coefficients $\alpha_{k-1}$, $\alpha_k$ and $\alpha_{k+1}$ and an adder 41b that adds the results of the respective multiplications.

The pixel $x_k$ created by the compressor 41 is represented by

$$x_k = \alpha_{k-1} \cdot x_{k-1} + \alpha_k \cdot x_k + \alpha_{k+1} \cdot x_{k+1}$$

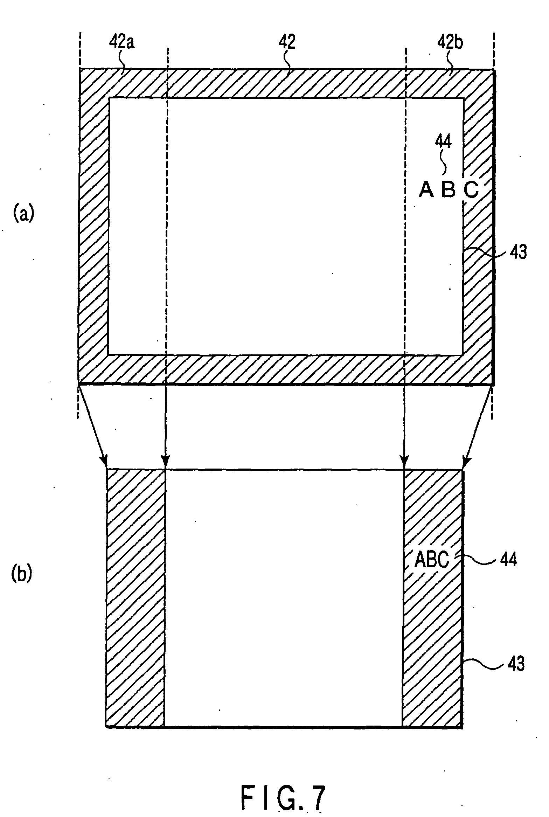

FIG. 7 shows at (a) and (b) an example of control of regions on which compression is performed. In FIG. 7 (a), a screen area 42 indicates a picture display area that a data broadcast provider intends and a screen area 43 indicates a picture display area in a display screen mode set by the user. A character string 44 to be displayed as instructed by the data broadcast provider extends beyond the screen area 43 set by the user, so that its portion becomes invisible.

In such a case, regions 42a and 42b as regions of compression are set up on opposite sides in the horizontal direction of the screen area 42 in such a way as to contain the character string 44. The regions 42a and 42b are then compressed in the horizontal direction so that the character string 44 is totally incorporated into the screen area 43 as shown in FIG. 7(b). Thus, the character string 44 becomes totally visible.

Although, in the example of FIG. 7, the regions 42a and 42b on opposite sides of the screen area 42 are each compressed in the horizontal direction, only the region 42b that contains the character string 44 may be compressed. The compression can be performed not only in the horizontal direction but also in the vertical direction. In this case, the compression in the horizontal direction and the compression in the vertical direction may be combined appropriately.

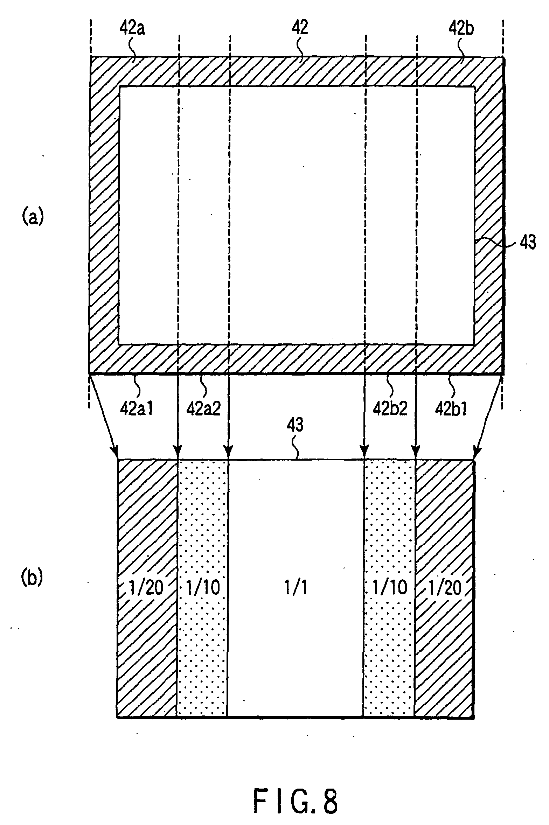

FIG. 8 shows at (a) and (b) another example of control of compression regions. As shown in FIG. 8 (a), in horizontally compressing the regions 42a and 42b on opposite sides in the horizontal direction of the screen area 42, each of these regions 42a and 42b is divided into two or more subregions: in the case of FIG. 8, two subregions 42a1 and 42a2, and 42b1 and 42b2.

As shown in FIG. 8(b), the compression ratio for the subregions 42a2 and 42b2 nearer the center of the screen area 42 and the compression ratio for the subregions 42a1 and 42b1 farther from the center of the screen area 42 are set different from each other. In this case, the farther the subregion is from the center of the screen area 42, the higher the compression ratio is set.

That is, in view of the fact that, in looking at a picture, a viewer concentrates upon its central portion, the compression ratio is set low (say, 1/10) for the subregions 42a2 and 42b2 nearer the center of the screen area 42 and the compression ratio is set high (say, 1/20) for the subregions 42a1 and 42b1 farther from the center of the screen area 42. By so doing, it becomes possible to reduce the viewer's feeling that that something is wrong.

Such control of compression ratio for each region can be readily implemented by writing data for varying the compression ratio for regions in the vertical and horizontal directions into the vertical compression ratio setting table 26b and the horizontal compression ratio setting table 26e.

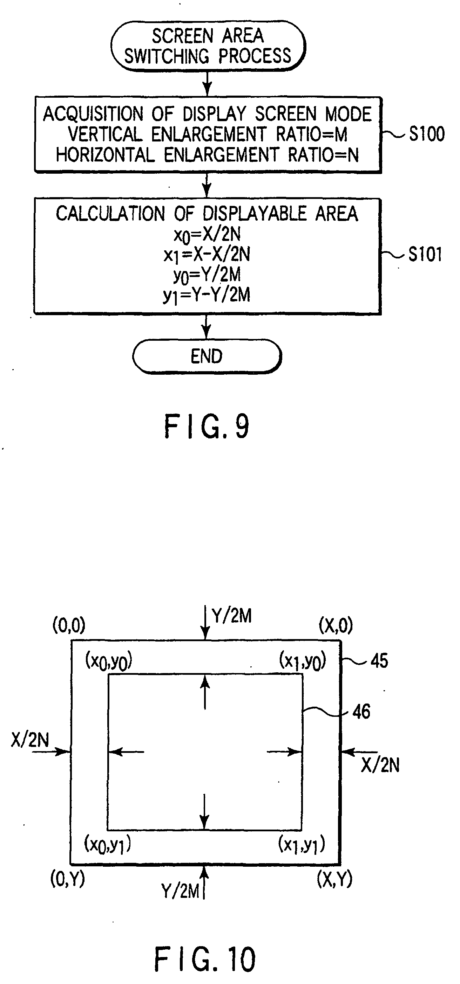

FIG. 9 is a flowchart illustrating the operation when the user switches from one display screen mode to another. When the user switches one display screen mode to another, in step S100 the MPU 25 acquires the enlargement ratio M in the vertical direction and the enlargement ratio N in the horizontal direction.

In subsequent step S101, the MPU 25 causes the displayable area calculation circuit 23 to calculate a displayable area. This involves calculating two coordinates in the horizontal direction: x0 and x1 and two coordinates in the vertical direction: y0 and y1. The displayable area is represented by the combination of the coordinates (x0, y0), (x1, y0), (x0, y1), and (x1, yl).

FIG. 10 illustrates a method of calculating the coordinates of the displayable area. Suppose here that the number of pixels in the horizontal direction and the number of lines in the vertical direction of a screen area 45 prior to display screen mode switching is X and Y, respectively. Then, the number of pixels in the horizontal direction and the number of lines in the vertical direction of a screen area 46 after display screen mode switching will be X/N and Y/M, respectively.

Considering that the screen area 46 is created by reducing the screen area 45 uniformly on each of its left, right, upper and lower sides, the screen area 46 is obtained by reducing the original screen area 45 by X/2N in each of its right and left portions and by Y/2M in each of its upper and lower portions as shown in FIG. 10.

Thus, the four coordinate values x0, x1, y0 and y1 that specify the screen area 46 can be easily calculated from the number of pixels, X, and the number of lines, Y, of the original screen area 46 as follows:

$$x0 = X/2N$$

$$x1 = X - (X/2N)$$

$$y0 = Y/2M$$

$$y1 = Y - (Y/2M)$$

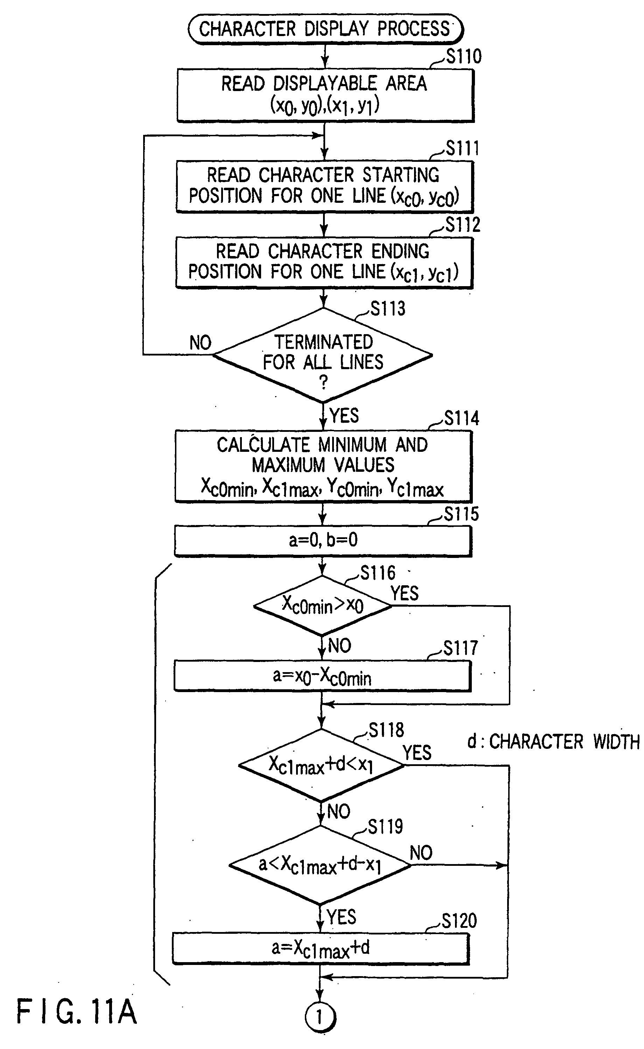

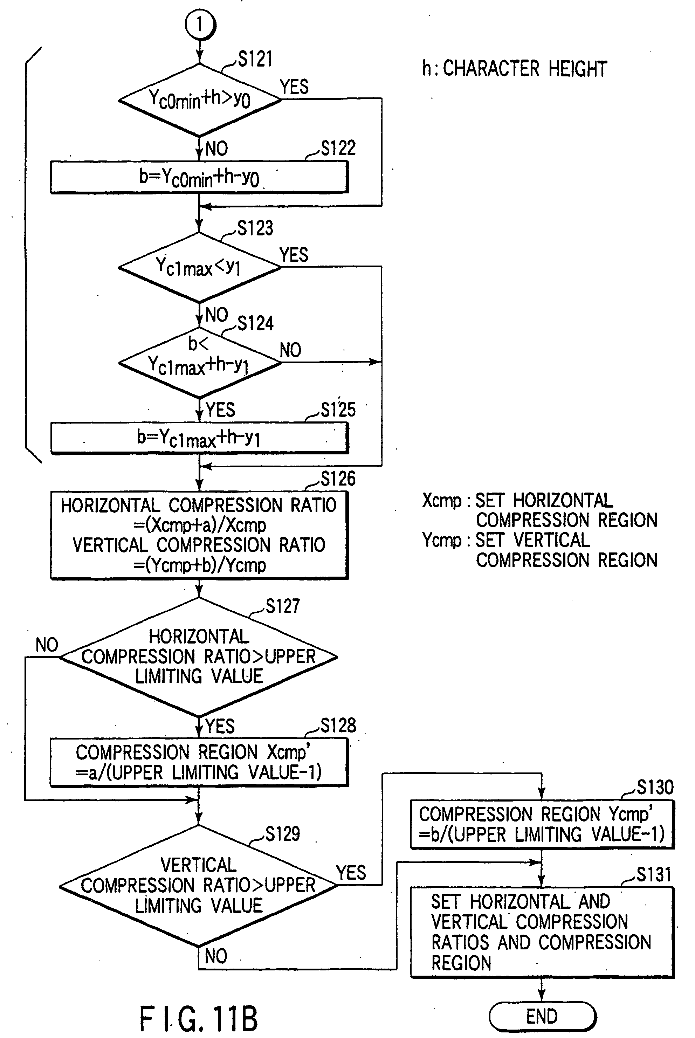

FIGS. 11A and 11B form a flowchart illustrating the above sequence of character display processing operations. First, in step S110, the MPU 25 reads the four coordinate values x0, x1, y0 and y1 representing the displayable area from the displayable area calculation circuit 23.

The MPU 25 reads in the displayed character starting position, (xc0, yc0), in step S111 and the displayed character ending position, (xc1, yc1), in step S112 for one line from the specified display area calculation circuit 20.

After that, a decision is made in step S113 as to whether the reading of the display character starting and ending positions has been terminated for all lines. If the decision is NO, the procedure returns to step S111.

If the decision is YES in step S113, then the MPU 25 finds, in step S114, the minimum values Xc0min and Yc0min of the displayed character display starting positions (Xc0, Yc0) and the maximum values Xc0max and Yc0max of the displayed character ending positions (Xc1, Yc1).

In this case, Xc0min indicates the character starting position in the horizontal direction and Xc0max indicates the character ending position in the horizontal direction. Likewise, Yc0min indicates the character starting position in the vertical direction and Yc0max indicates the character ending position in the vertical direction.

The MPU 25 then initializes character disappearance areas a in the horizontal direction and character disappearance areas b in the vertical direction in step S115.

The following steps from step S116 through step S120 illustrate a process operation of selecting a broader one of the right and left character disappearance areas in the horizontal direction. The succeeding steps from step S121 through step S125 illustrate a process operation of selecting a broader one of the upper and lower character disappearance areas in the vertical direction.

In step S116, the MPU 25 makes a decision of whether or not the character starting position Xc0min in the horizontal direction is larger in coordinate value than the displayable area starting position x0 in the horizontal direction.

If the character starting position Xc0min is not larger than the displayable area starting position x0 (NO in step S116), then the MPU 25 decides that there is character disappearance in the displayable area starting position in the horizontal direction (in FIG. 10, the area to the left of the screen area 46).

In that case, in step S117 the MPU 25 sets the displayable area starting position x0 minus the character starting position Xc0min as the character disappearance area a in the horizontal direction.

If, on the other hand, the character starting position Xc0min is larger than the displayable area starting position x0 (YES in step S116), then the MPU 25 decides that there is no character disappearance in the displayable area starting position x0 in the horizontal direction (in FIG. 10, the area to the left of the screen area 46).

In that case or after step S117, in step S118 the MPU 25 makes a decision of whether or not the character ending position Xc1max plus the character width d is smaller in coordinate value than the displayable area ending position x1 in the horizontal direction.

If the character ending position Xc1max plus the character width d is not smaller than the displayable area ending position x1 (NO in step S118), then the MPU 25 decides that character disappearance has occurred in the displayable area ending position in the horizontal direction (in FIG. 10, the area to the right of the screen area 46).

In that case, in step S119 the MPU 25 makes a decision of whether or not the character ending position Xc1max plus the character width d minus the displayable area ending position x1 is larger than the character disappearance area $\underline{a}$ previously set in step S117.

If YES in step S119, then in step S120 the MPU 25 sets the character ending position Xc1max plus the character width d as the character disappearance area $\underline{a}$ in the horizontal direction. The processes in steps S116 through S120 allow the broader one of the character disappearance areas on the right and left of the displayable area to be chosen.

After step S120, or when the decision in step S118 is YES, or when the decision in step S119 is NO, the procedure goes to step S121. In this step, the MPU 25 makes a decision of whether or not the character starting position Yc0min in the vertical direction plus the character height h is larger in coordinate value than the displayable area starting position y0 in the vertical direction.

If the character starting position Yc0min plus the character height h is not larger than the displayable area starting position y0 (NO in step 121), then the MPU 25 decides that character disappearance has occurred in the displayable area starting position y0 in the vertical direction (in FIG. 10, the area above the screen area 46).

In that case, in step S122 the MPU 25 sets the character starting position Yc0min plus the character height h minus the displayable area starting position y0 as a character disappearance area $\underline{b}$ in the vertical direction.

If, on the other hand, the character starting position Ycomin plus the character height h is larger than the displayable area starting position y0 (YES in step S121), then the MPU 25 decides that there is no character disappearance in the displayable area starting position in the vertical direction (in FIG. 10, the area above the screen area 46).

In that case or after step S122, in step S123 the MPU 25 makes a decision of whether or not the character ending position Yc1max in the vertical direction is smaller in coordinate value than the displayable area ending position y1 in the vertical direction.

If the character ending position Yc1max is not smaller than the displayable area ending position y1 (NO in step S123), then the MPU 25 decides that character missing has occurred in the displayable area ending position in the vertical direction (in FIG. 10, the area below the screen area 46).

In that case, in step S124 the MPU 25 makes a decision of whether or not the character ending position Yc1max plus the character height h minus the displayable area ending position y1 is larger than the character disappearance area $\underline{b}$ previously set in step S122.

If YES in step S124, then in step S125 the MPU 25 sets the character ending position Yc1max plus the character height h minus the displayable area ending position y1 as the character disappearance area b in the vertical direction. The processes in steps S121 through S125 allow the broader one of the character disappearance areas on the top and bottom of the displayable area to be chosen.

After step S125, or when the decision is YES in step S123, or when the decision is NO in step S124, the MPU 25 calculates horizontal and vertical compression ratios in step S126.

The horizontal and vertical compression ratios are calculated based on set horizontal and vertical compression regions Xcmp and Ycmp and horizontal and vertical character disappearance areas $\underline{a}$ and $\underline{b}$.

Specifically, the horizontal and vertical compression ratios are calculated to be:

$$\text{horizontal compression ratio} = (Xcmp + a)/Xcmp$$

$$\text{vertical compression ratio} = (Ycmp + b)/Ycmp$$

Next, the MPU 25 makes a decision of whether or not the horizontal compression ratio is in excess of its upper limiting value in step S127. The upper limit on the horizontal compression ratio is intended to circumvent a situation in which, when the character disappearance area in the horizontal direction is too broad, the compression ratio becomes so high that the viewer feels something is wrong.

If the decision is that the horizontal compression ratio is in excess of its upper limiting value (YES in step S127), then the MPU 25 sets the horizontal character disappearance area $\underline{a}$ divided by the upper limiting value minus 1 as a new horizontal compression region Xcmp' in step S128.

After step S128 or when the decision in step S127 is that the horizontal compression ratio is its upper limiting value or less (NO), the MPU 25 makes a decision of whether or not the vertical compression ratio is in excess of its upper limiting value in step S129.

As with the horizontal compression ratio, the upper limit is also imposed on the vertical compression ratio in order to circumvent a situation in which, when the character disappearance area in the vertical direction is too broad, the compression ratio becomes so high that the viewer feels something is wrong.

If the decision is that the vertical compression ratio is in excess of its upper limiting value (YES in step S129), then the MPU 25 sets the vertical character disappearance area <u>b</u> divided by the upper limiting value minus 1 as a new vertical compression region Ycmp' in step S130.

After step S130 or when the decision in step S129 is that the vertical compression ratio is its upper limiting value or less (NO), the MPU 25 sets a horizontal compression ratio, a vertical compression ratio, and a compression region to carry out compression processing. In this case, as described previously in connection with FIG. 8, the compression region may be divided into two or more subregions each having a different compression ratio set.

The television receiver thus configured allows character information to be displayed with no loss and without causing the viewer to feel something is wrong even or switching display screen modes.

For this reason, when viewing character information, the viewer is not required to switch to a display screen mode in which no characters are lost. In addition, data broadcast providers are also allowed to provide good information services because all character information can be displayed without any loss.

A second embodiment of the present invention will be described next. With television receivers, when characters or images are displayed long in a specific place on the screen with high luminance, screen burn may occur. At present, therefore, television receivers are equipped with a function of preventing the screen burn by shifting a picture displayed area randomly within the screen with power switching or channel selection as a trigger.

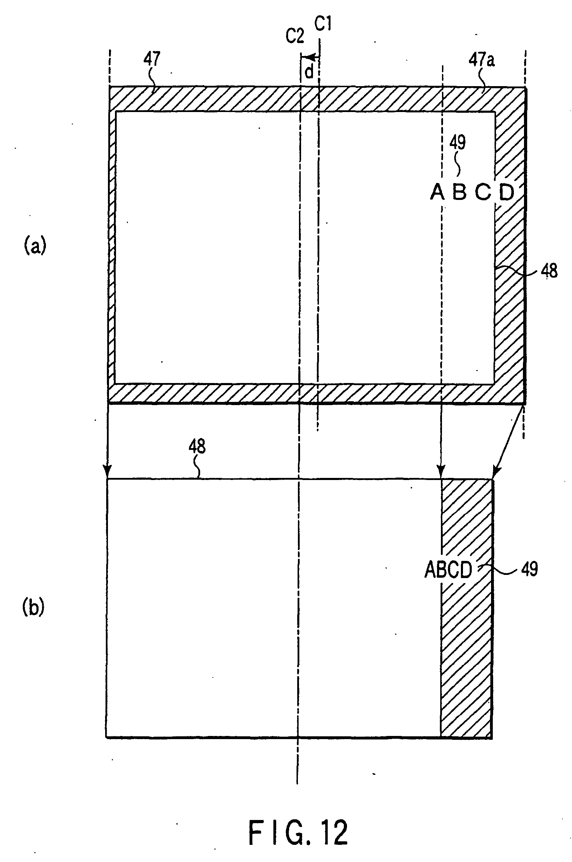

FIG. 12(a) shows a state in which, with a picture display area 48 in a display screen mode set by the user set up in a picture display area 47 assumed by data broadcast providers, the display area 48 has been shifted by the above screen burn preventing function and consequently a character string 49 has extended beyond the display area 48.

In this example, the picture display area 48 is shifted so that the center line C2 that bisects the picture display area 48 in the horizontal direction is displaced by d from the center line C1 that bisects the picture display area 47 in the horizontal direction.

In such a state, since a displacement, d, of the picture display area 48 is known in advance, a predetermined area 47a as a region of compression is set up on one side of the display area 47 including the character string 49. The area 47a is compressed in the horizontal direction so that it is incorporated in the picture display area 48 as shown in FIG. 12(b). In this manner, the character string 49 becomes displayed in its entirety within the picture display area 48.

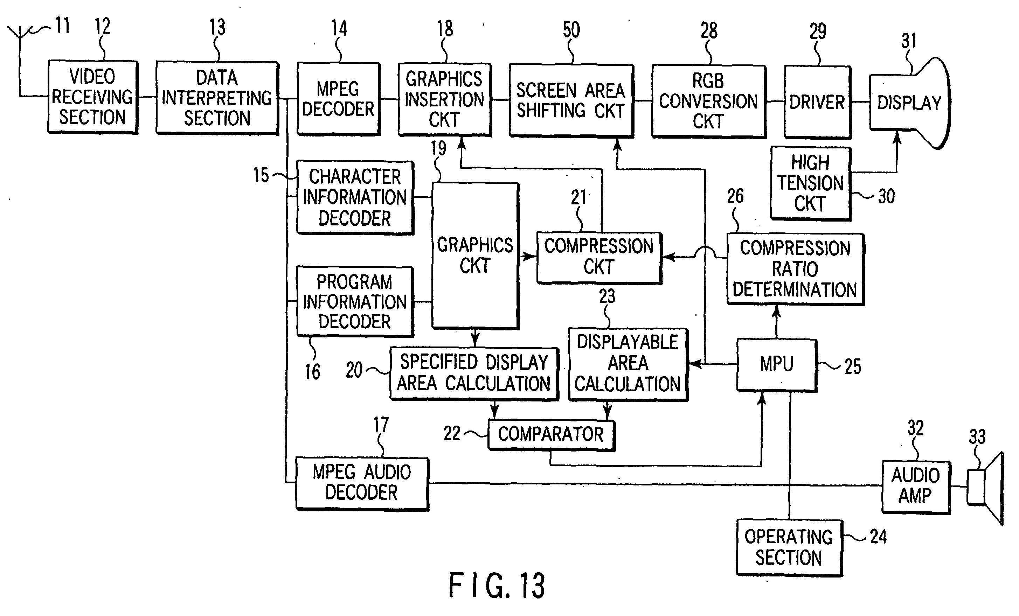

FIG. 13 shows the arrangement of a television receiver according to the second embodiment. In FIG. 13, like reference numerals are used to denote corresponding components to those in FIG. 1. In this television receiver, a picture shifting circuit 50 is installed in place of the picture enlargement circuit 27 in FIG. 1.

Upon reception of, for example, power switching operation information from the operating section 24, the MPU 25 issues an instruction to shift the picture to the picture shifting circuit 50 each time the power is turned on. At this point, information indicating the amount by which the picture is to be shifted is sent from the MPU 25 to the displayable area calculation circuit 23, so that horizontal and vertical displayable area information is calculated.

After that, as in the first embodiment, the output of the specified display area calculation circuit 20 and the output of the displayable area calculation circuit 23 are compared in the comparator 22 to calculate horizontal and vertical character disappearance area information. The compression ratio and the compression region are then set on the basis of the resultant character disappearance area information.

**Claims**

1. A received information display device **characterized by** comprising:

> an information display section (11-15, 18, 19, 25, 27-31) configured to receive picture information and character information (36-38, 44) and display the character information (36-38, 44) on a first picture display area (34, 42) set up on a display screen on the basis of the picture information;
> a switching section (24, 25, 27) configured to, in a state in which the picture information and the character information (36-38, 44) are being displayed on the first picture display area (34, 42) set up on the display screen by the information display section (11-15, 18, 19, 25, 27-31), switch from the first picture display area (34, 42) on the display screen to a second picture display area (35, 43) ;
> a detecting section (20, 22, 23, 25) configured to, in a state in which switching from the first picture display area (34, 42) on the display screen to the second picture display area (35, 43) has been made by the switching section (24, 25, 27), detect a character disappearance area in which a portion of the character information (36-38, 44) extends beyond the second picture display area (35, 43) and is not displayed;
> a setting section (25, 26) configured to, on the basis of the character disappearance area detected by the detecting section (20, 22, 23, 25), set a region of and a ratio of compression of the character information (36-38, 44) required to display that portion of character information (36-38, 44) which extends beyond the second picture display area (35, 43) and is not displayed within the second picture display area (35, 43); and

a compression section (21, 25) configured to compress the character information (36-38, 44) on the basis of the compression region and ratio set by the setting section (25, 26).

2. A received information display device according to claim 1, **characterized in that** the detecting section (20, 22, 23, 25) detects the character disappearance area by making a comparison between a specified display area of the character information (36-38, 44) and the second picture display area (35, 43).

3. A received information display device according to claim 1, **characterized in that** the detecting section (20, 22, 23, 25) includes a first detecting section (20, 22, 23, 25) configured to detect a horizontal character disappearance area of the character information (36-38, 44 which protrudes in the horizontal direction from the second picture display area (35, 43) and is not displayed, and a second detecting section (20, 22, 23, 25) configured to detect a vertical character disappearance area of the character information (36-38, 44 which protrudes in the vertical direction from the second picture display area (35, 43) and is not displayed.

4. A received information display device according to claim 3, **characterized in that** the first detecting section (20, 22, 23, 25) detects the horizontal character disappearance area by making a comparison between a display area specified in the horizontal direction of the character information (36-38, 44) and a displayable area in the horizontal direction of the second picture display area (35, 43), and the second detecting section (20, 22, 23, 25) detects the vertical character disappearance area by making a comparison between a display area specified in the vertical direction of the character information (36-38, 44) and a displayable area in the vertical direction of the second picture display area (35, 43).

5. A received information display device according to claim 1, **characterized in that** the setting section (25, 26) divides the region of compression of the character information (36-38, 44) required to display that portion of character information (36-38, 44) which extends beyond the second picture display area (35, 43) and is not displayed within the second picture display area (35, 43) into a plurality of subregions (42a1, 42a2; 42b1, 42b2) and sets a different compression ratio for each of the subregions (42a1, 42a2, 42b1, 42b2).

6. A received information display device according to claim 5, **characterized in that** the setting section (25, 26) sets the compression ratios for the subregions such that the farther the subregion is from the center of the display screen, the higher the compression ratio is set.

7. A received information display device according to claim 1, **characterized in that** the setting section (25, 26) includes a first setting section (25, 26d, 26e, 26f) configured to set a region of and a ratio of compression in the horizontal direction of the character information (36-38, 44) required to display that portion of character information (36-38, 44) which extends beyond the second picture display area (35, 43) and is not displayed within the second picture display area (35, 43), and a second setting section (25, 26da 26b, 26c) configured to set a region of and a ratio of compression in the vertical direction of the character information (36-38, 44) required to display that portion of character information (36-38, 44) which extends beyond the second picture display area (35, 43) and is not displayed within the second picture display area (35, 43).

8. A method for controlling a received information display device **characterized by** comprising:

receiving picture information and character information (36-38, 44) to display the character information (36-38, 44) on a first picture display area (34, 42) set up on a display screen on the basis of the picture information;

switching, in a state in which the picture information and the character information (36-38, 44) are being displayed on the first picture display area (34, 42) set up on the display screen by the information display section (11-15, 18, 19, 25, 27-31), from the first picture display area (34, 42) on the display screen to a second picture display area (35, 43);

detecting, in a state in which switching from the first picture display area (34, 42) on the display screen to the second picture display area (35, 43) has been made, a character disappearance area in which a portion of the character information (36-38, 44) extends beyond the second picture display area (35, 43) and is not displayed;

setting, on the basis of the detected character disappearance area, a region of and a ratio of compression of the character information (36-38, 44) required to display that portion of character information (36-38, 44) which extends beyond the second picture display area (35, 43) and is not displayed within the second picture display area (35, 43); and

compressing the character information (36-38, 44) on the basis of the set compression region and ratio.

9. A method for controlling a received information display device according to claim 8, **characterized in that** the character disappearance area is detected by making a comparison between a specified display area of the character information (36-38, 44) and the second picture display area (35, 43).

10. A method for controlling a received information display device according to claim 8, **characterized in that** the region of compression of the character information (36-38, 44) required to display that portion of character information (36-38, 44) which extends beyond the second picture display area (35, 43) and is not displayed within the second picture display area (35, 43) is divided into a plurality of subregions (42a1, 42a2; 42b1, 42b2) and a different compression ratio is set for each of the subregions (42a1, 42a2, 42b1, 42b2).

**Patentansprüche**

1. Anzeigevorrichtung für empfangene Information, **gekennzeichnet durch**:

einen Informationsanzeigeabschnitt (11-15, 18, 19, 25, 27-31), der ausgestaltet ist, um Bildinformation und Zeicheninformation (36-38, 44) zu empfangen und die Zeicheninformation (36-38, 44) auf einem ersten Bildanzeigebereich (34, 42) anzuzeigen, der auf einem Bildschirm auf der Grundlage der Bildinformation eingerichtet ist;
einen Schaltabschnitt (24, 25, 27), der ausgestaltet ist, um in einem Zustand, bei dem die Bildinformation und die Zeicheninformation (36-38, 44) auf dem ersten Bildanzeigebereich (34, 42) angezeigt werden, der auf dem Bildschirm **durch** den Informationsanzeigeabschnitt (11-15, 18, 19, 25, 27-31) eingerichtet ist, von dem ersten Bildanzeigebereich (34, 42) auf dem Bildschirm auf einen zweiten Bildanzeigebereich (35, 43) umschalten;
einen Erfassungsabschnitt (20, 22, 23, 25), der ausgestaltet ist, um in einem Zustand, bei dem das Umschalten von dem ersten Bildanzeigebereich (34, 42) auf dem Anzeigebereich in den zweiten Bildanzeigebereich (35, 43) **durch** den Schaltabschnitt (24, 25, 27) durchgeführt wurde, einen Zeichenverschwindungsbereich zu erfassen, bei dem sich ein Abschnitt der Zeicheninformation (36-38, 44) über den zweiten Bildanzeigebereich (35, 43) hinaus erstreckt und nicht angezeigt wird;
einen Einstellabschnitt (25, 26), der ausgestaltet ist, um auf der Grundlage des **durch** den Erfassungsabschnitt (20, 22, 23, 25) erfassten Zeichenverschwindungsbereich eine Region von und ein Verhältnis der Komprimierung der Zeicheninformation (36-38, 44) einzustellen, die erforderlich sind, um den Abschnitt der Zeicheninformation (36-38, 44) anzuzeigen, der sich über den zweiten Bildanzeigebereich (35, 43) hinaus erstreckt und nicht innerhalb des zweiten Bildanzeigebereichs (35, 43) angezeigt wird;
einen Komprimierungsabschnitt (21, 25), der ausgestaltet ist, um die Zeicheninformation (36-38, 44) auf der Grundlage der Komprimierungsregion und des **durch** den Einstellabschnitt (25, 26) eingestellten Verhältnisses zu komprimieren.

2. Anzeigevorrichtung für empfangene Information gemäß Anspruch 1, **dadurch gekennzeichnet, dass** der Erfassungsabschnitt (20, 22, 23, 25) den Zeichenverschwindungsbereich erfasst, indem ein Vergleich zwischen einem spezifizierten Anzeigenbereich der Zeicheninformation (36-38, 44) und dem zweiten Bildanzeigebereich (35, 43) durchgeführt wird.

3. Anzeigevorrichtung für empfangene Information gemäß Anspruch 1, **dadurch gekennzeichnet, dass** der Erfassungsabschnitt (20, 22, 23, 25) einen ersten Erfassungsabschnitt (20, 22, 23, 25) aufweist, der ausgestaltet ist, um einen horizontalen Zeichenverschwindungsbereich der Zeicheninformation (36-38, 44), der in der horizontalen Richtung von dem zweiten Bildanzeigebereich (35, 43) hervorsteht und nicht angezeigt wird, und einen zweiten Erfassungsbereich (20, 22, 23, 25), der ausgestaltet ist, um einen vertikalen Zeichenverschwindungsbereich der Zeicheninformation (36-38, 44) zu erfassen, der in der vertikalen Richtung von dem zweiten Bildanzeigebereich (35, 43) hervorsteht und nicht angezeigt wird, zu erfassen.

4. Anzeigevorrichtung für empfangene Information gemäß Anspruch 3, **dadurch gekennzeichnet, dass** der erste Erfassungsabschnitt (20, 22, 23, 25) den horizontalen Zeichenverschwindungsbereich erfasst, indem ein Vergleich zwischen einem in der horizontalen Richtung der Zeicheninformation (36-38, 44).spezifizierten Anzeigebereich und einem in der horizontalen Richtung des zweiten Bildanzeigebereichs (35, 43) anzeigbaren Bereich durchgeführt wird, und der zweite Erfassungsabschnitt (20, 22, 23, 25) den vertikalen Zeichenverschwindungsbereich erfasst, indem ein Vergleich zwischen einem in der vertikalen Richtung der Zeicheninformation (36-38, 44) spezifizierten Anzeigebereich und einem in der vertikalen Richtung des zweiten Bildanzeigebereichs (35, 43) anzeigbaren Bereich durchgeführt wird.

5. Anzeigevorrichtung für empfangene Informationen gemäß Anspruch 1, **dadurch gekennzeichnet, dass** der Einstellabschnitt (25, 26) die Region der Komprimierung der Zeicheninformation (36-38, 44), die erforderlich ist, um den Abschnitt von Zeicheninformation (36-38, 44) anzuzeigen, der sich über den zweiten Bildanzeigebereich (35, 43) hinaus erstreckt und nicht innerhalb des zweiten Bildanzeigebereichs (35, 43) angezeigt wird, in eine Mehrzahl von Subregionen (42a1, 42a2; 42b1, 42b2) unterteilt und ein unterschiedliches Komprimierungsverhältnis für jede der Subregionen (42a1, 42a2, 42b1, 42b2) einstellt.

6. Anzeigevorrichtung für empfangene Information gemäß Anspruch 5, **dadurch gekennzeichnet, dass** der Einstellabschnitt (25, 26) die Komprimierungsverhältnisse für die Subregionen einstellt, sodass, je weiter die Subregion von der Mitte des Bildschirms ist, desto höher das Komprimierungsverhältnis eingestellt wird.

7. Anzeigevorrichtung für empfangene Information gemäß Anspruch 1, **dadurch gekennzeichnet, dass** der Einstellabschnitt (25, 26) seinen ersten Einstellabschnitt (25, 26d, 26e, 26f), der ausgestaltet ist, um eine Region von und ein Verhältnis der Komprimierung in der horizontalen Richtung der Zeicheninformation (36-38, 44) einzustellen, die erforderlich sind, um den Abschnitt von Zeicheninformation (36-38, 44) anzuzeigen, der sich über den zweiten Bildanzeigebereich (35, 43) hinaus erstreckt und nicht innerhalb des zweiten Bildanzeigebereichs (35, 43) angezeigt wird, und einen zweiten Einstellabschnitt (25, 26a, 26b, 26c) der ausgestaltet ist, um eine Region von und ein Verhältnis der Komprimierung in der vertikalen Richtung der Zeicheninformation (36-38, 44) einzustellen, die erforderlich sind, um den Abschnitt von Zeicheninformation (36-38, 44) anzuzeigen, der sich über den zweiten Bildanzeigebereich (35, 43) hinaus erstreckt und nicht innerhalb des zweiten Bildanzeigebereichs (35, 43) angezeigt wird, umfasst.

8. Verfahren zum Steuern einer Anzeigevorrichtung für empfangene Information, **gekennzeichnet durch**:

Empfangen von Bildinformationen und Zeicheninformation (36-38, 44), um die Zeicheninformation (36-38, 44) auf einem ersten Bildanzeigebereich (34, 42) anzuzeigen, der auf einem Bildschirm auf der Grundlage der Bildinformation eingerichtet wurde;
Umschalten, in einem Zustand, bei dem die Bildinformation und die Zeicheninformation (36-38, 44) auf dem ersten Bildanzeigebereich (34, 42) angezeigt werden, der auf dem Bildschirm **durch** den Informationsanzeigeabschnitt (11-15, 18, 19, 25, 27-31) eingerichtet wurde, von dem ersten Bildanzeigebereich (34, 42) auf dem Bildschirm in einen zweiten Bildanzeigebereich (35, 43);
Erfassen, in einem Zustand, bei dem Umschalten von dem ersten Bildanzeigebereich (34, 42) auf dem Bildschirm in einem zweiten Bildanzeigebereich (35, 43) durchgeführt wurde, eines Zeichenverschwindungsbereichs, in dem sich ein Abschnitt der Zeicheninformation (36-38, 44) über den zweiten Bildanzeigebereich (35, 43) hinaus erstreckt und nicht angezeigt wird;
Einstellen auf der Grundlage des erfassten Zeichenverschwindungsbereichs einer Region von und ein Verhältnis der Komprimierung der Zeicheninformation (36-38, 44), die erforderlich sind, um den Abschnitt von Zeicheninformation (36-38, 44) anzuzeigen, der sich über den zweiten Bildanzeigebereich (35, 43) hinaus erstreckt und nicht innerhalb des zweiten Bildanzeigebereichs (35, 43) angezeigt wird; und
Komprimieren der Zeicheninformation (36-38, 44) auf der Grundlage der eingestellten Komprimierungsregion und Verhältnisses.

9. Verfahren zum Steuern einer Anzeigevorrichtung für empfangene Information gemäß Anspruch 8, **dadurch gekennzeichnet, dass** der Zeichenverschwindungsbereich erfasst wird, indem ein Vergleich zwischen einem spezifizierten Anzeigebereich der Zeicheninformation (36-38; 44) und dem zweiten Bildanzeigebereich (35, 43) durchgeführt wird.

10. Verfahren zum Steuern einer Anzeigevorrichtung für empfangene Information gemäß Anspruch 8, **dadurch gekennzeichnet, dass** die Region der Komprimierung der Zeicheninformation (36-38, 44), die erforderlich ist, um den Abschnitt von Zeicheninformation (36-38, 44) anzuzeigen, der sich über den zweiten Bildanzeigebereich (35, 43) hinaus erstreckt und nicht innerhalb des zweiten Bildanzeigebereichs (35, 43) angezeigt wird, in eine Mehrzahl von Subregionen (42a1, 42a2; 42b1, 42b2) unterteilt und ein unterschiedliches Komprimierungsverhältnis für jede der Subregionen (42a1, 42a2, 42b1, 42b2) eingestellt wird.

**Revendications**

1. Dispositif d'affichage d'information reçue, **caractérisé en ce qu'**il comprend :

une section d'affichage d'information (11-15, 18, 19, 25, 27-31) qui est configurée pour recevoir une information d'image et une information de caractères (36-38, 44) et pour afficher l'information de caractères (36-38, 44) sur une première zone d'affichage d'image (34, 42) qui est instaurée sur un écran d'affichage sur la base de l'information d'image ;

une section de commutation (24, 25, 27) qui est configurée pour, dans un état dans lequel l'information d'image et l'information de caractères (36-38, 44) sont en train d'être affichées sur la première zone d'affichage d'image (34, 42) instaurée sur l'écran d'affichage au moyen de la section d'affichage d'information (11-15, 18, 19, 25, 27-31), réaliser une commutation depuis la première zone d'affichage d'image (34, 42) sur l'écran d'affichage sur une seconde zone d'affichage d'image (35, 43) ;

une section de détection (20, 22, 23, 25) qui est configurée pour, dans un état dans lequel une commutation depuis la première zone d'affichage d'image (34, 42) sur l'écran d'affichage sur la seconde zone d'affichage d'image (35, 43) a été réalisée au moyen de la section de commutation (24, 25, 27), détecter une zone de disparition de caractères dans laquelle une partie de l'information de caractères (36-38, 44) s'étend au delà de la seconde zone d'affichage d'image (35, 43) et n'est pas affiché ;

une section d'établissement (25, 26) qui est configurée pour, sur la base de la zone de disparition de caractères qui est détectée au moyen de la section de détection (20, 22, 23, 25), établir une région de l'information de caractères (36-38, 44) et un taux de compression de cette même information de caractères comme requis pour afficher la partie de l'information de caractères (36-38, 44) qui s'étend au delà de la seconde zone d'affichage d'image (35, 43) et qui n'est pas affichée dans la seconde zone d'affichage d'image (35, 43) ; et

une section de compression (21, 25) qui est configurée pour comprimer l'information de caractères (36-38, 44) sur la base de la région de compression et du taux de compression comme établi au moyen de la section d'établissement (25, 26).

2. Dispositif d'affichage d'information reçue selon la revendication 1, **caractérisé en ce que** la section de détection (20, 22, 23, 25) détecte la zone de disparition de caractères en réalisant une comparaison entre une zone d'affichage spécifiée de l'information de caractères (36-38, 44) et la seconde zone d'affichage d'image (35, 43).

3. Dispositif d'affichage d'information reçue selon la revendication 1, **caractérisé en ce que** la section de détection (20, 22, 23, 25) inclut une première section de détection (20, 22, 23, 25) qui est configurée pour détecter une zone de disparition de caractères horizontale de l'information de caractères (36-38, 44) qui fait saillie suivant la direction horizontale à partir de la seconde zone d'affichage d'image (35, 43) et qui n'est pas affichée et une seconde section de détection (20, 22, 23, 25) qui est configurée pour détecter une zone de disparition de caractères verticale de l'information de caractères (36-38, 44) qui fait saillie suivant la direction verticale à partir de la seconde zone d'affichage d'image (35, 43) et qui n'est pas affichée.

4. Dispositif d'affichage d'information reçue selon la revendication 3, **caractérisé en ce que** la première section de détection (20, 22, 23, 25) détecte la zone de disparition de caractères horizontale en réalisant une comparaison entre une zone d'affichage qui est spécifiée suivant la direction horizontale de l'information de caractères (36-38, 44) et une zone affichable suivant la direction horizontale de la seconde zone d'affichage d'image (35, 43), et la seconde section de détection (20, 22, 23, 25) détecte la zone de disparition de caractères verticale en réalisant une comparaison entre une zone d'affichage qui est spécifiée suivant la direction verticale de l'information de caractères (36-38, 44) et une zone affichable suivant la direction verticale de la seconde zone d'affichage d'image (35, 43).

5. Dispositif d'affichage d'information reçue selon la revendication 1, **caractérisé en ce que** la section d'établissement (25, 26) divise la région de compression de l'information de caractères (36-38, 44) qui est requise pour afficher la partie de l'information de caractères (36-38, 44) qui s'étend au delà de la seconde zone d'affichage d'image (35, 43) et qui n'est pas affichée dans la seconde zone d'affichage d'image (35, 43) selon une pluralité de sous-régions (42a1, 42a2 ; 42b1, 42b2) et établit un taux de compression différent pour chacune des sous-régions (42a1, 42a2 ; 42b1, 42b2).

6. Dispositif d'affichage d'information reçue selon la revendication 5, **caractérisé en ce que** la section d'établissement (25, 26) établit les taux de compression pour les sous-régions de telle sorte que plus la sous-région est éloignée du centre de l'écran d'affichage, plus le taux de compression soit établi à une valeur élevée.

7. Dispositif d'affichage d'information reçue selon la revendication 1, **caractérisé en ce que** la section d'établissement (25, 26) inclut une première section d'établissement (25, 26d, 26e, 26f) qui est configurée pour établir une région de compression et un taux de compression suivant la direction horizontale de l'information de caractères (36-38, 44) comme requis pour afficher la partie de l'information de caractères (36-38, 44) qui s'étend au delà de la seconde zone d'affichage d'image (35, 43) et qui n'est pas affichée dans la seconde zone d'affichage d'image (35, 43) et une seconde section d'établissement (25, 26a, 26b, 26c) qui est configurée pour établir une région de compression et un taux de compression suivant la direction verticale de l'information de caractères (36-38, 44) comme requis pour afficher la partie de l'information de caractères (36-38, 44) qui s'étend au delà de la seconde zone d'affichage d'image (35, 43) et qui n'est pas affichée dans la seconde zone d'affichage d'image (35, 43).

**8.** Procédé pour commander un dispositif d'affichage d'information reçue, **caractérisé en ce qu'il** comprend :

la réception d'une information d'image et d'une information de caractères (36-38, 44) pour afficher l'information de caractères (36-38, 44) sur une première zone d'affichage d'image (34, 42) qui est instaurée sur un écran d'affichage sur la base de l'information d'image ;

la commutation, dans un état dans lequel l'information d'image et l'information de caractères (36-38, 44) sont en train d'être affichées sur la première zone d'affichage d'image (34, 42) qui est instaurée sur l'écran d'affichage par la section d'affichage d'information (11-15, 18, 19, 25, 27-31), depuis la première zone d'affichage d'image (34, 42) sur l'écran d'affichage selon une seconde zone d'affichage d'image (35, 43) ;

la détection, dans un état dans lequel une commutation depuis la première zone d'affichage d'image (34, 42) sur l'écran d'affichage sur la seconde zone d'affichage d'image (35, 43) a été réalisée, d'une zone de disparition de caractères dans laquelle une partie de l'information de caractères (36-38, 44) s'étend au delà de la seconde zone d'affichage d'image (35, 43) et n'est pas affichée ;

l'établissement, sur la base de la zone de disparition de caractères détectée, d'une région de compression et d'un taux de compression de l'information de caractères (36-38, 44) comme requis pour afficher la partie de l'information de caractères (36-38, 44) qui s'étend au delà de la seconde zone d'affichage d'image (35, 43) et qui n'est pas affichée dans la seconde zone d'affichage d'image (35, 43) ; et

la compression de l'information de caractères (36-38, 44) sur la base de la région de compression et du taux de compression établis.

**9.** Procédé pour commander un dispositif d'affichage d'information reçue selon la revendication 8, **caractérisé en ce que** la zone de disparition de caractères est détectée en réalisant une comparaison entre une zone d'affichage spécifiée de l'information de caractères (36-38, 44) et la seconde zone d'affichage d'image (35, 43).

**10.** Procédé de commande d'un dispositif d'affichage d'information reçue selon la revendication 8, **caractérisé en ce que** la région de compression de l'information de caractères (36-38, 44) qui est requise pour afficher la partie de l'information de caractères (36-38, 44) qui s'étend au delà de la seconde zone d'affichage d'image (35, 43) et qui n'est pas affichée à l'intérieur de la seconde zone d'affichage d'image (35, 43) est divisée selon une pluralité de sous-régions (42a1, 42a2 ; 42b1, 42b2) et un taux de compression différent est établi pour chacune des sous-régions (42a1, 42a2 ; 42b1, 42b2).

FIG. 1

EP 1 395 045 B1

F I G. 2

EP 1 395 045 B1

VERTICAL CHARACTER DISAPPEARANCE AREA INFORMATION

VERTICAL DISPLAYABLE AREA INFORMATION

VERTICAL SPECIFIED DISPLAY AREA INFORMATION

34  35

36

ABCDEFGHIJKLMN

37

OPQRSTUVWXYZ

38

ABCDEFGHIJKLMN

HORIZONTAL SPECIFIED DISPLAY AREA INFORMATION

HORIZONTAL DISPLAYABLE AREA INFORMATION

HORIZONTAL CHARACTER DISAPPEARANCE AREA INFORMATION

FIG. 3

35

36

ABCDEFGHIJKLMN

37

OPQRSTUVWXYZ

38

ABCDEFGHIJKLMN

FIG. 4

F I G. 5

F I G. 6

(a)

42a | 42 | 42b

44

A B C

43

(b)

ABC — 44

43

FIG. 7

FIG. 8

SCREEN AREA
SWITCHING PROCESS

ACQUISITION OF DISPLAY SCREEN MODE
VERTICAL ENLARGEMENT RATIO=M
HORIZONTAL ENLARGEMENT RATIO=N ~S100

CALCULATION OF DISPLAYABLE AREA
$x_0 = X/2N$
$x_1 = X - X/2N$
$y_0 = Y/2M$
$y_1 = Y - Y/2M$
~S101

END

# FIG. 9

$Y/2M$

$(0,0)$ $(X,0)$

$(x_0, y_0)$ $(x_1, y_0)$ ~45

46

$X/2N$ $\overline{X/2N}$

$(x_0, y_1)$ $(x_1, y_1)$

$(0,Y)$ $(X,Y)$
$Y/2M$

# FIG. 10

20

CHARACTER DISPLAY PROCESS

S110
READ DISPLAYABLE AREA
$(x_0, y_0), (x_1, y_1)$

S111
READ CHARACTER STARTING
POSITION FOR ONE LINE $(x_{c0}, y_{c0})$

S112
READ CHARACTER ENDING
POSITION FOR ONE LINE $(x_{c1}, y_{c1})$

S113
TERMINATED
FOR ALL LINES
?
NO
YES

S114
CALCULATE MINIMUM AND
MAXIMUM VALUES
$X_{c0min}, X_{c1max}, Y_{c0min}, Y_{c1max}$

S115
$a=0, b=0$

S116
$X_{c0min} > x_0$
YES
NO

S117
$a = x_0 - X_{c0min}$

d : CHARACTER WIDTH

S118
$X_{c1max} + d < x_1$
YES
NO

S119
$a < X_{c1max} + d - x_1$
NO
YES

S120
$a = X_{c1max} + d$

FIG. 11A

(1)

21

h: CHARACTER HEIGHT

Xcmp : SET HORIZONTAL COMPRESSION REGION
Ycmp : SET VERTICAL COMPRESSION REGION

**① (1)**

S121 — $Y_{c0min} + h > y_0$ — YES →

NO ↓

S122 — $b = Y_{c0min} + h - y_0$

S123 — $Y_{c1max} < y_1$ — YES →

NO ↓

S124 — $b < Y_{c1max} + h - y_1$ — NO →

YES ↓

S125 — $b = Y_{c1max} + h - y_1$

S126 —
HORIZONTAL COMPRESSION RATIO $= (Xcmp + a)/Xcmp$
VERTICAL COMPRESSION RATIO $= (Ycmp + b)/Ycmp$

S127 — HORIZONTAL COMPRESSION RATIO > UPPER LIMITING VALUE — NO →

YES ↓

S128 — COMPRESSION REGION $Xcmp' = a/(\text{UPPER LIMITING VALUE} - 1)$

S129 — VERTICAL COMPRESSION RATIO > UPPER LIMITING VALUE — YES →

NO →

S130 — COMPRESSION REGION $Ycmp' = b/(\text{UPPER LIMITING VALUE} - 1)$

S131 — SET HORIZONTAL AND VERTICAL COMPRESSION RATIOS AND COMPRESSION REGION

END

# FIG. 11B

FIG. 12

F I G. 13

EP 1 395 045 B1